# EUROPEAN PATENT APPLICATION

(11) **EP 4 043 617 A1**
(43) Date of publication of application: **17.08.2022**
(21) Application number: 20874307.0
(22) Date of filing: 28.09.2020
(51) Int. Cl.: C25C 3/16, C25C 3/20, C25C 7/06

(54) **INSTALLATION AND METHOD FOR ELECTROPLATING WITH ACTIVE INTERCELL BARS**

(30) Priority: 07.10.2019 ES 201930869
(71) Applicant: Prado Pueo, Félix, 22400 Monzón (Huesca) (ES)
(72) Inventor: Prado Pueo, Félix, 22400 Monzón (Huesca) (ES)
(74) Representative: Schäfer, Matthias W.
(86) International application number: PCT/ES2020/070578
(87) International publication number: WO 2021/069774

(57) **Abstract**

Electrodeposition installation with active intercell bars which comprises at least three cells connected or capable of being connected in series between the positive pole and the negative pole of a rectifier, several active intercell bars installed between the said cells and also at the ends of the installation, each comprising a common conductive body with multiple busbar segments, one for each electrode, electrically insulated but independently electrically connectable to the common conductive body or to an extension cable by means of switches controlled from a microcomputer with remote communication capacity.

This invention affords the main advantage of providing a conventional plant with secure protection of electrodes against short circuits, with complete management of production by means of complete monitoring of the process in real time, and with a greater production capacity by means of the internal depolarisation of the electrodes.

## Description

This description relates, as its title indicates, to an electrodeposition installation with active intercell bars, of the type used in processes of metal electrodeposition, electrowinning, electrorefining or coating. This installation comprises at least three cells connected or capable of being connected in series between the positive pole and the negative pole of a rectifier, and several active intercell bars installed between the said cells and also at the ends of the installation.

Each of these active intercell bars, in turn, comprises a common conductive body with multiple busbar segments, one for each electrode, electrically insulated but independently electrically connectable to the common conductive body or to an extension cable by means of switches controlled from a local control device installed in the active bar itself, with remote access from a microcomputer, providing complete management of production with complete real-time monitoring of the process, and allowing operation with a greater production capacity by means of internal depolarisation of the electrodes and secure protection of the electrodes against short-circuits.

### Field of the invention

The invention relates to the field of metal electrodeposition plants and processes in which the production cells that contain the electrodes and the electrolyte are connected or can be connected together by means of an electrical intercell bar.

### Current State of the Art

Electrodeposition installations are currently widely known and used, either electrorefining installations, where the metal to be deposited on the cathode constitutes the anode itself, or electrowinning where the metal to be deposited is dissolved in the electrolyte. They comprise cells that contain the electrolyte and at least three electrodes that are connected together forming a chain with a power supply in series. When two electrodes are placed face to face in an electrolytic medium, the electrode with the most positive potential is called the anode and the one with the most negative potential, the cathode, thus electrode is the generic term used to refer to both. Examples of these conventional electrodeposition installations are described, for example, in patents ES2112025 *"Metal alloy continuous electrodeposition cell",* ES2556039 *"Anodic compartment for metal electrodeposition cells"* or ES2092993 *"Electrical conductor, especially for use* as *an insoluble anode in electrodeposition processes, and in electro-chemical processes in general, and procedure for its production".*

A simplified diagram of these conventional electrodeposition installations is portrayed in figure -1- and in figure -2-, which shows a representative section (16) of a conventional electrodeposition installation that consists of three portions of three cells. In these conventional installations each of the cells is connected to the previous one, this way receiving its electric current, and to the following one, supplying it with the same current, and thus the same electric current is shared by the whole chain of cells in series, achieving a result of the reuse of the electric current. More specifically, all the cathodes (17) of the previous cell rest on and connect to an electric busbar which we call an intercell bar (18). In turn, all the anodes (19) of the following cell rest on and connect, alternating with the previous cathodes, to the same intercell bar (18). The anodes and cathodes share the intercell bar although they belong to two different consecutive cells and, in this way, electrical connection of all the cells in series is established. The anodes of the first cell in the chain are connected to the positive bar of the rectifier (20); the cathodes of the last cell are connected to the negative bar of the rectifier (21). The whole assembly is monitored from a control room (23).

There are many known structural variations in the shapes of intercell bars: triangular, rectangular, the so-called dog bone, with slots or triangular grooves into which the bars or hangers fit, or combinations of the foregoing but, in the end, the function is the same, a metal conductive bar, usually copper, which connects two consecutive cells in series while redistributing the electric currents of the electrodes connected in parallel. It is worth noting that these bars are passive since they do not carry out any switching action on the currents, and only act as a fixed channel for the distribution of the current. It is important to highlight that in production, the current arrows leave the surface of the anodes (19), pass through the electrolyte that fills the cell and enter the cathodes (17) on to which the metal is deposited.

Industrial installations for these production processes have a series of limitations or handicaps: limited production density due to the polarisation that occurs with a high current density, low energy performance and a reduced life or durability of the permanent physical components.

To solve some of these problems, specifically that of production and performance, macro transformers can be used which superimpose the plant rectifier and drastically alter the total current at the plant, but this is an expensive solution that is costly to install and very voluminous, and for this reason, to date, has not proven to be really feasible in industry.

Other solutions have been attempted, such as that described in ES2642124 *"System for the evaluation of current distribution in electrodes of electrochemical plants"* which uses electric probes to monitor the consumption of cell sections, but does not manage to provide solutions for the rest of the problems in this technology.

The increase of the current density in electrodes would allow us to reduce the large volume and cost of plants, the problem of capacity and quality can also be improved by optimal management of production cycles and, lastly, the protection, detection and deactivation of short-circuit elements improves performance, production quality and the duration of components.

### Description of the invention

To resolve currently existing problems relating to electrodeposition processes, the electrodeposition installation with active intercell bars that is the object of this invention has been devised, which comprises
- at least three cells connected or capable of being connected in series between the positive pole and the negative pole of a rectifier, the first cell being that connected to the positive pole,
- several active intercell bars installed between the said cells, and also at the ends of the installation, each of which in turn comprises a common conductive body with multiple busbar segments, one for each electrode, the said busbar segments being electrically insulated from the common conductive body, and each one of the of the busbar segments being independently electrically connectable to the common conductive body by means of at least one production switch controlled by means of a control element, this control element also having means for measuring the voltage at terminals of the production switch, and optionally current sensors, and
- at least a control microcomputer, equipped with specific software and with digital communication means with each and every one of the control elements and remote communication capacity.

The busbar segments may be electrically connected to the anodes or to the cathodes of the cells, or to both electrodes.

The common conductive body of each active intercell bar has, electrically associated, an extension cable arranged in parallel to the previous or following active intercell bar, depending on whether it is connected to an anode or a cathode, being connectable to the busbar segments of the active intercell bar on which it is arranged in parallel, by means of reversing switches controlled by a control element.

The control computer has means for establishing and modifying the software and control parameters and for capturing all the process data sampled and transmitted by the control elements. It also stores the ampere hours accumulated from the start of the deposition process and this information is used by the management software, which will provide a representation of the metal deposited on the cathodes at any time. Any abnormal deviation in the current or voltage will be immediately communicated as an alarm and suitably treated.

This electrodeposition installation with active intercell bars that is described has an associated, characteristic operating procedure, which comprises
- An operating stage, involving the activation of the production switches and deactivation of the reversing switches, which is carried out continually for most of the total time, being exited cyclically for a short period of time for the execution of the rest of the stages. In the event of an imminent short-circuit, it is exited permanently, in order to enter a state of protection.
- a current measurement stage, after which the operating stage is returned to,
- a short-circuit control stage, involving the measuring of voltage at terminals, with all the switches deactivated, after which the operating stage is returned to, except in the event of an imminent short-circuit, in which case it is exited permanently in order to enter a state of protection,
- a depolarisation stage, involving the deactivation of the production switches and the activation of the reversing switches, after which the operating stage is returned to, and
- a communication stage,
being carried out periodically for all of the electrodes.

### Advantages of the invention

This electrodeposition installation with active intercell bars that is presented affords numerous advantages over currently available equipment, the most important of these being that it allows a conventional plant to be equipped with secure electrode protection against short-circuits, with the complete management of production by means of complete monitoring of the process in real time, and with a greater production capacity by means of the internal depolarisation of the electrodes.

It is important to highlight that, by using smart active intercell bars, we also achieve real-time monitoring of the state of production, instantly informing the control room computer of the currents and voltages of all the cells.

Another important advantage of these bars is that we can also obtain an increase in production capacity and quality since, without any additional external alternating or direct current power supply, our active intercell bar can apply a metered quantity of reverse current on the electrodes which, as is known, mitigates polarisation, all of this combined with the protection of the electrodes against short-circuits.

It is also noteworthy that the solutions adopted succeed in resolving the problems inherent in conventional installations. Thus, the production problem is improved by directly increasing the current at the plant, or in other words, the current density at the electrodes, the problem of capacity and quality is also improved by the optimal management of production cycles and, lastly, the protection, detection and deactivation of short-circuited elements improves performance, quality of production and the duration of components.

Likewise, it is important not to forget that, as seen in the description, this electrical activity is easily implementable in an existing production plant, is not at all invasive, has a low economic cost and is far from the complex solutions existing until our invention, some consisting mainly of macro transformers that superimpose the plant rectifier and drastically alter the total plant current, and which to date, have proven not to be really feasible in industry due to their complexity and high economic cost. Others modify the structure of each of the thousands and thousands of anodes that make up the plant so that they also involve a high degree of complexity and a high cost.

### Description of the figures

To gain a better understanding of the object of this invention, the attached drawing represents a conventional installation and a preferred practical embodiment of an electrodeposition installation with active intercell bars.

In the drawing, figure -1- shows a schematic diagram of a conventional electrodeposition installation.
Figure -2- shows a representative section of a conventional electrodeposition installation, which consists of three portions of three cells, with arrows indicating the direction of the electric current.
Figure -3- shows a representative section of an electrodeposition installation in its preferred embodiment with active intercell bars connected to the anodes, with arrows indicating the direction of the electric current.
Figure -4- shows a partial detail of an active intercell bar in an electrodeposition installation, in its preferred embodiment, with active intercell bars connected to the anodes, with an enlarged detail of one of the sets of switches and its control element.
Figure -5- shows a representative section of an electrodeposition installation in an alternative embodiment with active intercell bars, in this case connected to the cathodes, with arrows indicating the direction of the electric current.
Figure -6- shows a partial detail of an active intercell bar in an electrodeposition installation in an alternative embodiment with active intercell bars connected to the cathodes, with an enlarged detail of one of the sets of switches and its control element.
Figure -7- shows a simplified block diagram of a control computer.
Figure -8- shows a simplified flowchart of the characteristic operating procedure.

### Preferred embodiment of the invention

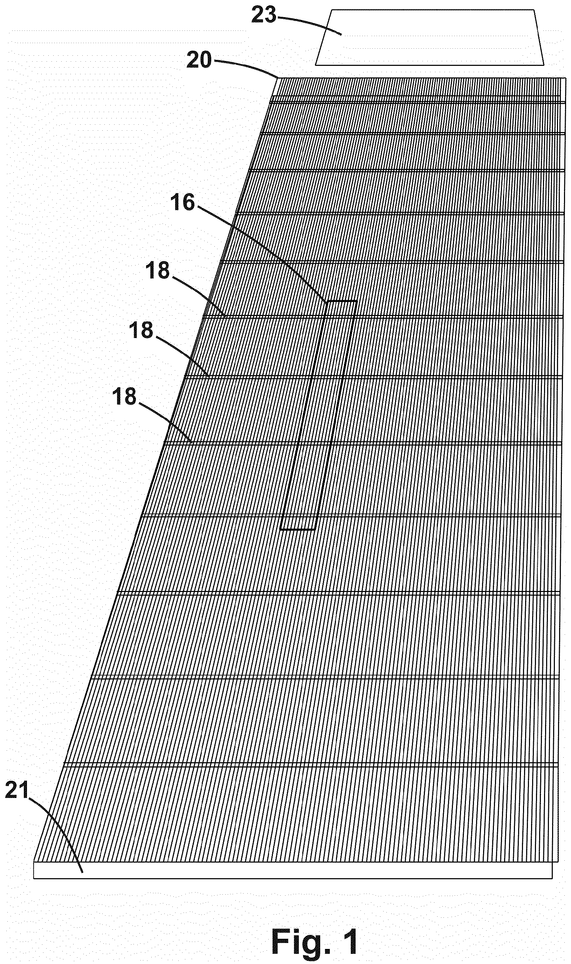

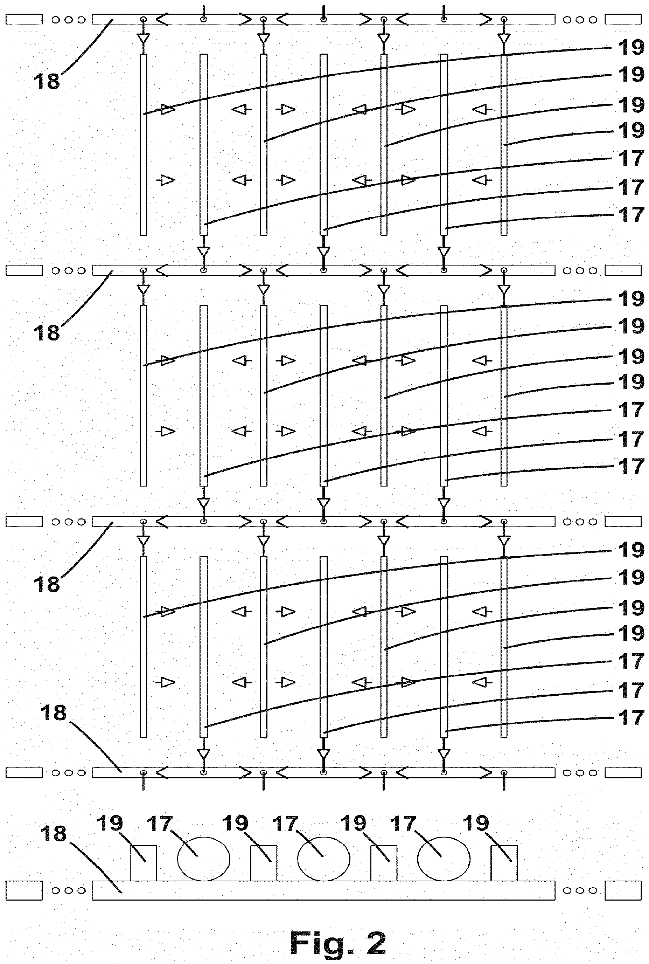

The conformation and characteristics of the invention can be better understood in the following description that relates to the attached figures. For greater clarity and to achieve a better appreciation of the differences, figure 1 shows a schematic diagram of a conventional electrodeposition installation and figure 2 shows a standard cell with conventional passive intercell bars.

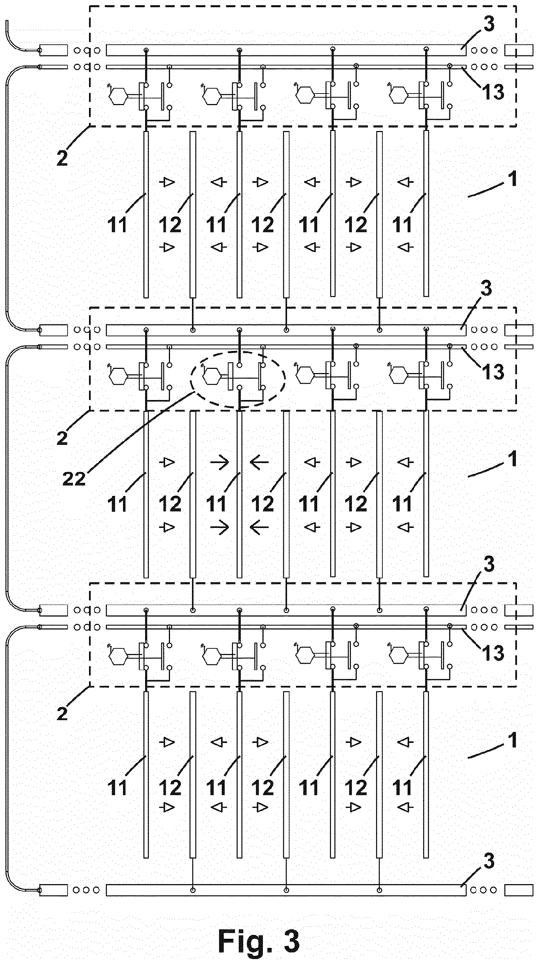

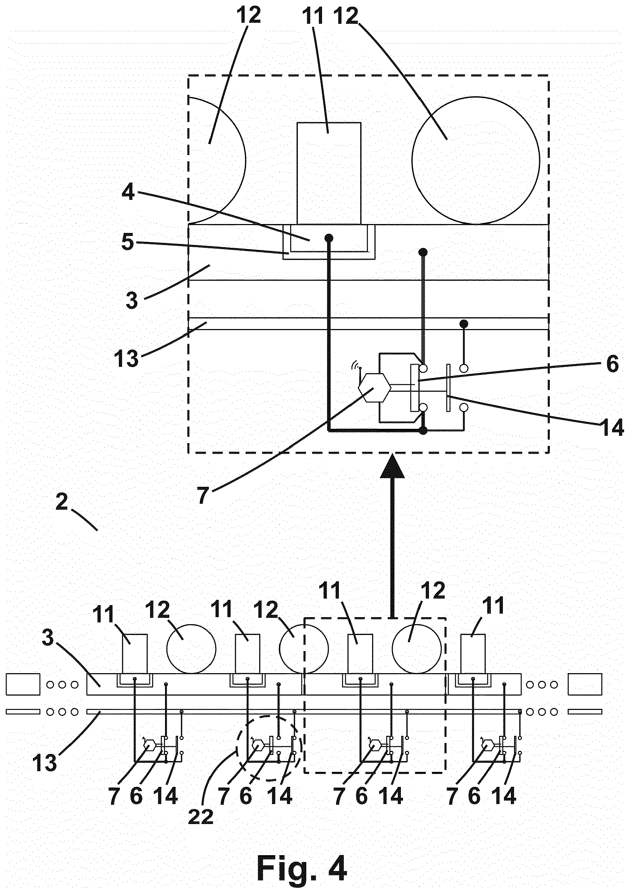

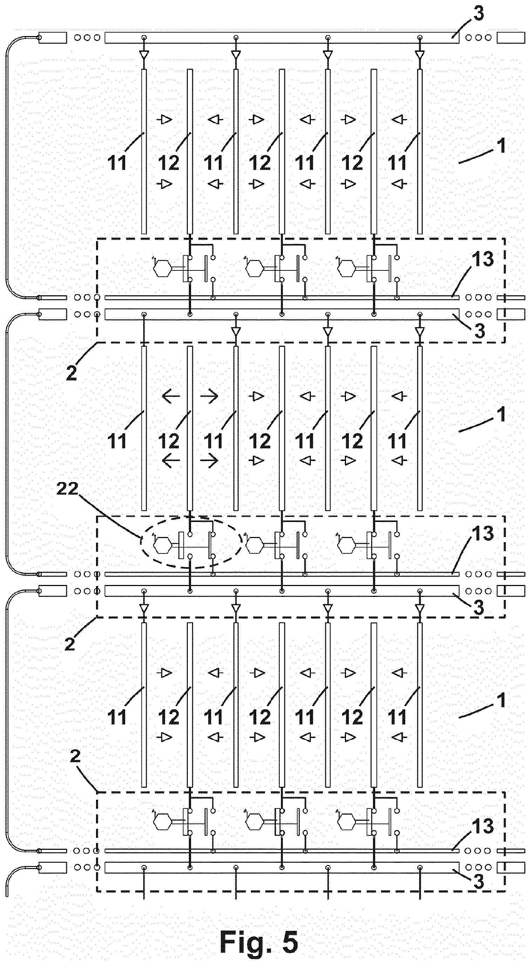

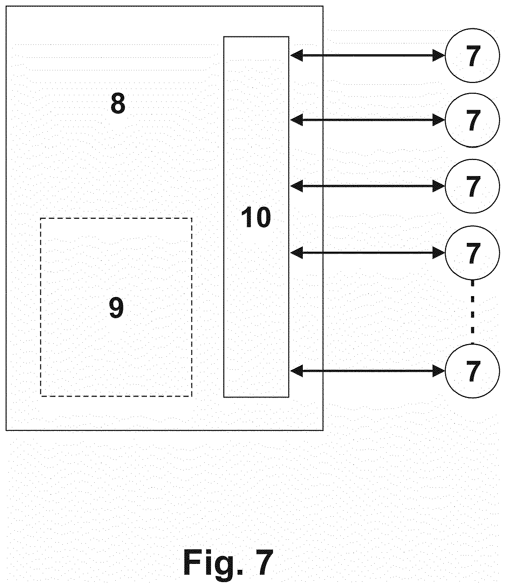

In figures 3, 4, 5, 6, and 7 an electrodeposition installation with active intercell bars is shown, comprising
- at least three cells (1) connected or capable of being connected in series between the positive pole and the negative pole of a rectifier, the first cell being that connected to the positive pole,
- several active intercell bars (2) installed between the said cells (1), and also at the ends of the installation, each of which in turn comprises a common conductive body (3) with multiple busbar segments (4), associated mechanically, one for each electrode, the said busbar segments (4) being electrically insulated from the common conductive body (3), by insulating means (5) and each one of the of the busbar segments (4) being independently electrically connectable to the common conductive body (3) by means of at least one production switch (6) controlled by means of a control element (7) for each production switch (6), this control element (7) also having means for measuring the voltage at the terminals of the production switch (6) and optionally current sensors, and
- at least a control microcomputer (8), provided with its corresponding specific software (9), and with digital communication means (10) with each and every one of the control elements (7) and with the control room (23).

The busbar segments (4) are electrically connected to the anodes (11) of the cells (1), as shown in figures 3 and 4, or in an alternative embodiment, to the cathodes (12) of the cells (1), as shown in figures 5 and 6. Likewise, another alternative embodiment is envisaged, combining both connections simultaneously by means of doubly active intercell bars, one controlled segment for the anodes (11) and another for the cathodes (12), with the same control computer (8). These busbar segments (4) can be superimposed or inserted in the common conductive body (3).

The common conductive body (3) of each active intercell bar (2) has an extension cable (13), electrically associated or connected, arranged in parallel to any previous active intercell bar (2), preferably the immediately previous one, in the case of busbar segments (4) electrically connected to the anodes (11), or to any following active intercell bar (2), preferably the immediately following one, in the case of busbar segments (4) electrically connected to the cathodes (12), being connectable to the busbar segments (4) of the active intercell bar (2) on which it is arranged in parallel, by means of reversing switches (14) controlled by means of the control element (7).

The production switches (6) and the reversing switches (14) can be both solid-state electronic switches and electromechanical circuit breakers or relays, or any combination of the two.

The digital communication means (10) of the control computer (8) with all the control elements (7) and with the control room (23) may be any of those known, both wired and wireless. They will be chosen preferably from the group formed by Ethernet cable, PLC wired communication, Wi-Fi wireless communication and Bluetooth wireless communication or similar.

The control computer (8) will have means for establishing and modifying the software and control parameters locally and from the control room (23), and for capturing all the process data sampled and transmitted by the control elements (7) and transmitting them to the control room (23). In addition, it will store the ampere hours accumulated from the start of the deposition process and the management software, which will provide a representation of the metal deposited on the cathodes (12) at any time. Any abnormal deviation in the current or voltage will be immediately communicated as an alarm and suitably treated.

This electrodeposition installation with active intercell bars that is described has an associated, characteristic operating procedure, which comprises
- an operating stage (24),
- a current measurement stage (25),
- a short-circuit control stage (26),
- a depolarisation stage (27), and
- a communication stage (28),
which are carried out periodically for all of the electrodes.

The operating stage (24) comprises the activation of the production switches (6) and the deactivation of the reversing switches (14), commanded from the control computer (8) by means of the digital communication means (10) to all the control elements (7). This stage is carried out continually for most of the total time, preferably more than 96% of the total time, being exited cyclically for a short length of time, in the region of milliseconds, for the execution of the rest of the stages. In the event of an imminent short-circuit, it is exited permanently to enter a state of protection (29).

In the current measurement stage (25), the control elements (7) sample the voltage drop at the terminals of the production switches (6) in an activated state (closed), and transmit the value by means of the digital communication means (10) to the control computer (8) in which, by means of linearization tables, the value of the current at each electrode (11) or (12) is obtained; if any current value exceeds a pre-set value, that production switch (6) is deactivated. Alternatively, if the control elements (7) have a current sensor, in the current measurement stage, the control elements (7), directly measure, by means of their current sensor, the current circulating through the production switches (6) in the activated state (closed), and transmit the value by means of the digital communication means (10) to the control computer (8); if any current value exceeds a pre-set value, that production switch (6) is deactivated. After the execution of this stage, the operating stage (24) is returned to.

In the short-circuit control stage (26), a pair of production switch (6) and its corresponding reversing switch (14), is deactivated for a reduced, pre-set time, of around one or several milliseconds, while at the same time the potential on the electrode side is read and the value is transmitted by means of the digital communication means (10) to the control computer (8), and, if this potential is very different to a pre-set value, an alarm is generated and a state of protection (29) is entered into, disconnection being maintained for that pair of production switch (6) and its corresponding reversing switch (14), for the duration of the said alarm, this way achieving the short-circuit protection of the electrodes. In this way we achieve much higher short-circuit detection sensitivity than that obtained by measuring the current, or in other words, detection and early protection before a very high current is reached in the event of a slight short-circuit contact, given that the electrode is in a floating or disconnected electrical state (both switches deactivated), the said short-circuit contact will drag the potential of the free or floating electrode very notably towards the electrode that short-circuits it, this measurement of the voltage of the floating electrode displaced towards its complementary electrode will indicate the state of imminent short-circuit. After execution of this stage the operating stage (24) is returned to, except in the case of an imminent short circuit, in which it is exited permanently to enter a state of protection (29).

In the depolarisation stage (27), a production switch (6) is deactivated for a reduced, pre-set time, of around one or several milliseconds, while its corresponding reversing switch (14) is activated, which for a short period of time establishes a connection to a reverse voltage obtained from the cells themselves by means of the extension cable (13), giving rise to the required amount of reverse current in the electrode to achieve its depolarisation. This stage is illustrated in figures 3, 4, 5 and 6 by means of a set of switches (22) in this configuration. This depolarisation stage will be carried out periodically for all the electrodes. The periods of production and of depolarisation by reverse current will be established experimentally by process technicians, according to the characteristics and circumstances of the production in process. The scope of this patent does not include establishing these periods or doses of depolarisation charge. After the execution of this stage the operating stage (24) is returned to.

In the communication stage (28), each control element (7) sends a local information packet, including the short-circuit state, current measurement, voltage measurement..., by means of the digital communication means (10), to the control microcomputer (8) and to the control room (23), and checks if a remote command, data or order is received from the control microcomputer (8) or from the control room (23). After the execution of this stage the operating stage (24) is returned to.

As a reference or starting point we provide proposed values, obtained from experimental trials:
- production period 6 seconds,
- reverse current period 0.15 seconds with a reverse current amplitude of around 40% with respect to the production current, 0.15 sec. x 0.4 amp / (6 sec. x 1 amp) x 100 = 1.5;

A 1.5 percent depolarisation charge with respect to that of production has been shown to be sufficient in a copper electrorefining process operating in a laboratory at 750 amperes per square metre.

In our invention, all these disconnections in production, introducing short reverse current connections, will occur at thousands and thousands of points throughout the plant, at each of the thousands of switches, with a random distribution provided by a random number generating algorithm, implemented in the specific software (9) of the control computer (8), or with a sequenced, but always uniform scanning action, so that in total only a small background murmur or almost undetectable electrical ripple will be generated at the main rectifier terminals.

As can be seen, this electrical activity is in no way invasive as it is very far from the solutions proposed until to our invention, consisting of macro transformers which superimpose plant rectifiers and drastically alter the total plant current, and for this reason, to date, they have not proven to be really feasible in industry.

It is to be clearly stated that, if required, these reverse currents can be deactivated (resetting the reversing period value to zero); this can be done in total or selectively by type of anode/cathode electrode (to anodes only, to cathodes only, to both, to none), by selected electrodes or by time intervals, to selectively explore optimal production conditions/results.

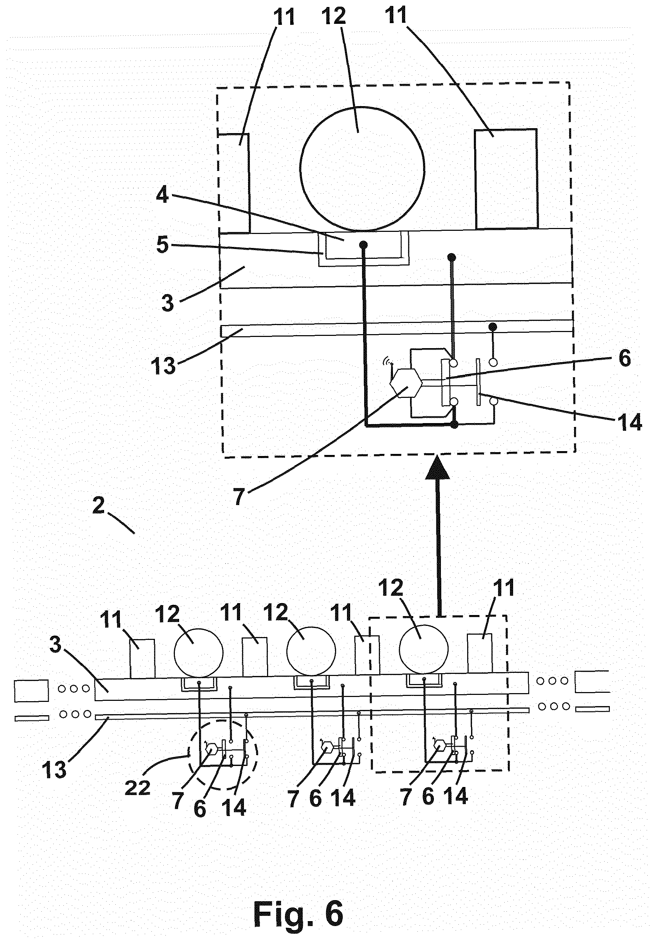

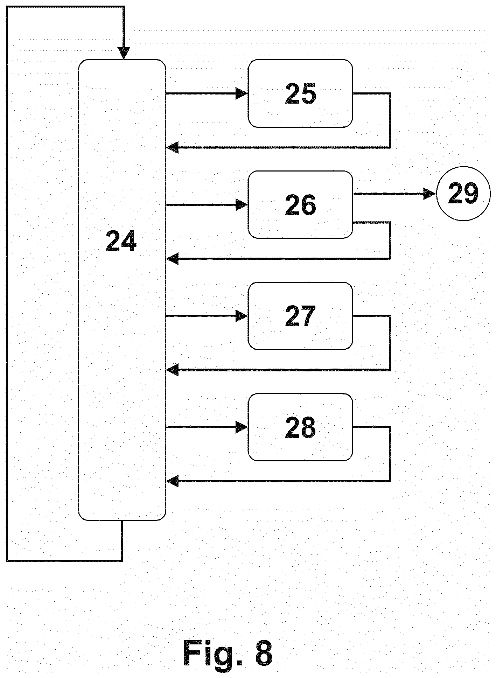

As can be seen in the figures, the invention can be applied : to the anodes (11) only, as shown in figures 3, 4 and 5, to the cathodes (12) only, as shown in figures 6,7 and 8 and it is also possible to apply it simultaneously to the anodes (11) and the cathodes (12) at the same time on the same active bar. The three options are, in general, feasible and effective but the advisability of applying one option or another will depend on the metal and on the plant electrodes to be controlled, although the final decision will be up to the user/customer, bearing in mind his budget/costs and opinions.

A person skilled in the art will easily comprehend that the characteristics of different embodiments can be combined with the characteristics of other possible embodiments, provided that the combination is technically possible.

All of the information referring to examples or embodiments form part of the description of the invention.

## Claims

1. - Electrodeposition installation with active intercell bars **characterised in that** it comprises
- at least three cells (1) connected or capable of being connected in series between the positive pole and the negative pole of a rectifier, the first cell being that connected to the positive pole,
- several active intercell bars (2) installed between the said cells (1), and also at the ends of the installation, each of which in turn comprises a common conductive body (3) with multiple busbar segments (4), associated mechanically, one for each electrode, the said busbar segments (4) being electrically insulated from the common conductive body (3), by means of insulating means (5) and each one of the busbar segments (4) being independently electrically connectable to the common conductive body (3) by means of at least one production switch (6) controlled by means of a control element (7) for each production switch (6), this control element (7) also having means for measuring the voltage at the production switch (6) terminals, and
- at least a control computer (8), provided with specific software (9), with digital communication means (10) with each and every one of the control elements (7) and with the control room (23).

2. - Electrodeposition installation with active intercell bars, according to the preceding claim, **wherein** the busbar segments (4) are electrically connected to the anodes (11) of the cells (1).

3. - Electrodeposition installation with active intercell bars, according to claim 1, **wherein** the busbar segments (4) are electrically connected to the cathodes (12) of the cells (1).

4. - Electrodeposition installation with active intercell bars, according to any of the preceding claims, **wherein** the common conductive body (3) of each active intercell bar (2) has an extension cable (13) electrically associated, arranged in parallel to any previous active intercell bar (2) in the case of busbar segments (4) connected electrically to the anodes (11), or to any following active intercell bar (2), in the case of busbar segments (4) connected electrically to the cathodes (12), being connectable to the busbar segments (4) of the active intercell bar (2) on which it is arranged in parallel by means of reversing switches (14) controlled by the control element (7).

5. - Electrodeposition installation with active intercell bars, according to any of the preceding claims, **wherein** both the production switches (6) and the reversing switches (14) are chosen from the group formed by a solid state electronic switch and an electromechanical circuit breaker.

6. - Electrodeposition installation with active intercell bars, according to any of the preceding claims, **wherein** the control elements (7) incorporate a current sensor.

7. - Electrodeposition installation with active intercell bars, according to any of the preceding claims, **wherein** the digital communication means (10) of the control computer (8) with all the control elements (7) and the control room (23) are chosen from the group formed by Ethernet cable, wired PLC communication, WiFi wireless communication and Bluetooth wireless communication.

8. - Operating procedure of an electrodeposition installation with active intercell bars such as that described in the preceding claims, **wherein** it comprises
- an operating stage (24) that is carried out continually for most of the total time, being exited cyclically for a short length of time for the execution of the rest of the stages,
- a current measurement stage (25), returning, after the execution of this stage, to the operating stage (24),
- a short-circuit control stage (26), returning, after the execution of this stage, to the operating stage (24), except in the case of an imminent short circuit, in which case it is exited permanently to enter a state of protection (29).
- a depolarisation stage (27), returning, after the execution of this stage, to the operating stage (24),
- a communication stage (28), returning, after the execution of this stage, to the operating stage (24),
being carried out periodically for all of the electrodes.

9. - Operating procedure of an electrodeposition installation with active intercell bars, according to claim 8, **wherein** the operating stage (24) comprises the activation of the production switches (6) and the deactivation of the reversing switches (14), commanded from the control computer (8) by means of the digital communication means (10) to all of the control elements (7).

10. - Operating procedure of an electrodeposition installation with active intercell bars, according to either of claims 8 and 9, **wherein,** in the current measurement stage (25) , the control elements (7), directly measure, by means of their current sensor, the current circulating through the production switches (6) in the activated state (closed), and transmit the value by means of the digital communication means (10) to the control computer (8); if any current value exceeds a pre-set value, that production switch (6) is deactivated.

11. - Operating procedure of an electrodeposition installation with active intercell bars, according to either of claims 8 and 9, **wherein,** in the current measurement stage (25) , the control elements (7) sample the voltage fall at terminals of the production switches (6) in the activated state (closed), and transmit the value by means of the digital communication means (10) to the control computer (8) in which, by means of linearization tables, the value of the current at each electrode (11) or (12) is obtained; if any current value exceeds a pre-set value, that production switch (6) is deactivated.

12. - Operating procedure of an electrodeposition installation with active intercell bars, according to any of claims 8, 9, 10 and 11, **wherein,** in the short-circuit control stage (26), during a pre-set reduced time, of around one or several milliseconds, a production switch (6) and its corresponding reversing switch (14) pair are deactivated, at the same time as the potential on the electrode side is read and the value is transmitted by means of the digital communication means (10), to the control computer (8), and if this potential is very different to a pre-set value, an alarm is generated and a state of protection (29) is entered into, the disconnection being maintained for that production switch (6) and its corresponding reversing switch (14) pair, for the duration of the said alarm.

13. - Operating procedure of an electrodeposition installation with active intercell bars, according to any of claims 8, 9, 10, 11 and 12, **wherein,** in the depolarisation stage (27), a production switch (6) is deactivated during a pre-set reduced time, of around one or several milliseconds, while its corresponding reversing switch (14) is activated.

14. - Operating procedure of an electrodeposition installation with active intercell bars, according to any of claims 8, 9, 10, 11, 12 and 13, **wherein,** in the communication stage (28), each control element (7) sends a local information packet, comprising the short-circuit status, current measurement and voltage measurement, by means of the digital communication means (10), to the control microcomputer (8) and to the control room (23), and checks if it receives a command, data or remote order from the control microcomputer (8) or from the control room (23).

## Amended claims

### Amended claims under Art. 19.1 PCT

1. - Electrodeposition installation with active intercell bars **characterised in that** it comprises
- at least three cells (1) connected or capable of being connected in series between the positive pole and the negative pole of a rectifier, the first cell being that connected to the positive pole,
- several active intercell bars (2) installed between the said cells (1), and also at the ends of the installation, each of which in turn comprises a common conductive body (3) with multiple busbar segments (4), associated mechanically, one for each electrode, the said busbar segments (4) being electrically insulated from the common conductive body (3), by means of insulating means (5) and each one of the busbar segments (4) being independently electrically connectable to the common conductive body (3) by means of at least one production switch (6) controlled by means of a control element (7) for each production switch (6), this control element (7) also having means for measuring the voltage at the terminals of production switch (6), and
- at least a control computer (8), provided with specific software (9), with digital communication means (10) with each and every one of the control elements (7) and with the control room (23).

2. - Electrodeposition installation with active intercell bars, according to the preceding claim, **wherein** the busbar segments (4) are electrically connected to the anodes (11) of the cells (1).

3. - Electrodeposition installation with active intercell bars, according to claim 1, **wherein** the busbar segments (4) are electrically connected to the cathodes (12) of the cells (1).

4. - Electrodeposition installation with active intercell bars, according to any of the preceding claims, **wherein** the common conductive body (3) of each active intercell bar (2) has an extension cable (13) electrically associated, arranged in parallel to any previous active intercell bar (2), in the case of busbar segments (4) connected electrically to the anodes (11), or to any following active intercell bar (2), in the case of busbar segments (4) connected electrically to the cathodes (12), being connectable to the busbar segments (4) of the active intercell bar (2) on which it is arranged in parallel by means of reversing switches (14) controlled by the control element (7).

5. - Electrodeposition installation with active intercell bars, according to any of the preceding claims, **wherein** both the production switches (6) and the reversing switches (14) are chosen from the group formed by a solid state electronic switch and an electromechanical circuit breaker.

6. - Electrodeposition installation with active intercell bars, according to any of the preceding claims, **wherein** the control elements (7) incorporate a current sensor.

7. - Electrodeposition installation with active intercell bars, according to any of the preceding claims, **wherein** the digital communication means (10) of the control computer (8) with all the control elements (7) and with the control room (23) are chosen from the group formed by Ethernet cable, wired PLC communication, Wi-Fi wireless communication and Bluetooth wireless communication.

8. - Operating procedure of an electrodeposition installation with active intercell bars such as that described in the preceding claims, **wherein** it comprises
- an operating stage (24), involving the activation of the production switches (6) and the deactivation of the reversing switches (14), which is carried out continually for most of the total time, being exited cyclically for a short period of time for the execution of a short-circuit control stage (26) and a depolarisation stage (27),
- a current measurement stage (25), returning, after the execution of this stage, to the operating stage (24),
- a short-circuit control stage (26), in which a pair of production switch (6) and its corresponding reversing switch (14) is deactivated for a reduced pre-set time of around one or several milliseconds, while at the same time the potential on the electrode side is read, returning, after the execution of this stage, to the operating stage (24), except in the event of an imminent short circuit, when it is exited to enter a state of protection (29),
- a depolarisation stage (27), in which a production switch (6) is deactivated for a reduced, pre-set time of around one or several milliseconds, while its corresponding reversing switch (14) is activated, establishing a connection, by means of the extension cable (13), to a reverse voltage obtained from the cells themselves, returning, after the execution of this stage, to the operating stage (24), and
- a communication stage (28), in which each control element (7) sends a local information packet, by means of the digital communication means (10), to the control microcomputer (8) and to the control room (23), and checks if it receives a remote command, data or order from the control microcomputer (8) or from the control room (23), returning, after the execution of this stage, to the operating stage (24),
being carried out periodically for all of the electrodes.

9. - Operating procedure of an electrodeposition installation with active intercell bars, according to claim 8, **wherein** the activation of the production switches (6) and the deactivation of the reversing switches (14) in the operating stage (24) is commanded from the control computer (8) by means of the digital communication means (10) to all of the control elements (7).

10. - Operating procedure of an electrodeposition installation with active intercell bars, according to either of claims 8 and 9, **wherein,** in the current measurement stage (25) , the control elements (7), directly measure, by means of their current sensor, the current circulating through the production switches (6) in the activated state (closed), and transmit the value by means of the digital communication means (10) to the control computer (8); if any current value exceeds a pre-set value, that production switch (6) is deactivated.

11. - Operating procedure of an electrodeposition installation with active intercell bars, according to either of claims 8 and 9, **wherein,** in the current measurement stage (25) , the control elements (7) sample the voltage fall at terminals of the production switches (6) in the activated state (closed), and transmit the value by means of the digital communication means (10) to the control computer (8) in which, by means of linearization tables, the value of the current at each electrode (11) or (12) is obtained; if any current value exceeds a pre-set value, that production switch (6) is deactivated.

12. - Operating procedure of an electrodeposition installation with active intercell bars, according to any of claims 8, 9, 10 and 11, **wherein,** in the short-circuit control stage (26), the potential value on the electrode side, read during the deactivation of the pair of production switch (6) and its corresponding reversing switch (14), is transmitted by means of the digital communication means (10), to the control computer (8), and if this potential is very different to a pre-set value, an alarm is generated and a state of protection (29) is entered into, disconnection being maintained for that pair of production switch (6) and its corresponding reversing switch (14), for the duration of the said alarm.

13. - Operating procedure of an electrodeposition installation with active intercell bars, according to any of claims 8, 9, 10, 11 and 12, **wherein** , in the communication stage (28), the local information packet sent by each control element (7) to the control microcomputer (8) and to the control room (23) includes the short-circuit state, current measurement and voltage measurement.
